(19) Europäisches Patentamt
European Patent Office
Office européen des brevets

(11) Publication number: **0 460 855 B1**

(12) # EUROPEAN PATENT SPECIFICATION

(45) Date of publication of patent specification: **28.06.95**

(51) Int. Cl.6: **C08F 299/06**, C08F 220/36, C08F 220/14, C08F 2/44, C08F 265/04, C08F 265/06

(21) Application number: **91304816.1**

(22) Date of filing: **29.05.91**

(54) **Polymerizable compositions and method of producing in-mold cured products using same.**

(30) Priority: **29.05.90 JP 138882/90**
**28.11.90 JP 332244/90**
**01.05.91 JP 130555/91**

(43) Date of publication of application:
**11.12.91 Bulletin 91/50**

(45) Publication of the grant of the patent:
**28.06.95 Bulletin 95/26**

(84) Designated Contracting States:
**DE FR GB IT**

(56) References cited:
**EP-A- 0 064 809**
**EP-A- 0 277 813**
**US-A- 4 480 079**

(73) Proprietor: **Takemoto Yushi Kabushiki Kaisha**
**2-5, Minato-machi**
**Gamagouri-shi**
**Aichi-ken (JP)**

(72) Inventor: **Takayama, Yuuji**
**2-15-4 Tsunishi**
**Kamakura-shi,**
**Kanagawa-ken (JP)**
Inventor: **Matsueda, Hirokazu**
**4-3-8 NishiOdakano**
**Toyohashi-shi,**
**Aichi-ken (JP)**
Inventor: **Sugiura, Masato**
**955-1 Araimae,**
**Fusou-cho**
**Gamagouri-shi,**
**Aichi-ken (JP)**
Inventor: **Ozaki, Tatsuhiko**
**6-74 Eiraku-cho**
**Nishio-shi,**
**Aichi-ken (JP)**
Inventor: **Wada, Hirotaka**
**20-12 Matsubara-cho**
**Gamagouri-shi,**
**Aichi-ken (JP)**
Inventor: **Komiya, Iwao**
**106 Yamaninishimiuki haitsu,288 Aza-Hamaike,**
**Nishimiuki-cho,Toyohashi-shi,Aichi-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 460 855 B1

(74) Representative: **Ablewhite, Alan James et al**
**MARKS & CLERK,**
**57/60 Lincoln's Inn Fields**
**London WC2A 3LS (GB)**

## Description

This invention relates to polymerizable compositions and methods of producing in-mold cured products using such polymerizable compositions.

Known methods of producing molded products by in-mold curing of polymerizable composition include resin transfer molding (RTM) whereby a polymerizable composition is transferred into a mold for curing; casting molding; and reaction injection molding (RIM) and pultrusion whereby a bundle of fibers for reinforcement is preliminarily impregnated with a polymerizable composition prior to an in-mold curing process. The present invention relates to a polymerizable composition containing unsaturated urethane of a specified structure, alkyl (meth)acrylate and a thermoplastic macromolecular compound capable of dissolving in or swelling by impregnating alkyl (meth)acrylate. The invention also relates to a method of producing molded products with improved dimensional stability and surface property by in-mold curing of such a polymerizable composition at a specified initial mold temperature.

As examples of polymerizable compositions containing unsaturated urethane having within its molecule a group with radical polymerization characteristics and a urethane bond, U.S. Patent 4,480,079 has proposed those polyisocyanates having more than two isocyanate groups in the molecule or polyurethane polyisocyanates, unsaturated urethane obtainable from hydroxyalkyl (meth)acrylate, and alkyl (meth)-acrylate. If a product is produced by in-mold curing of such a prior art polymerizable composition containing unsaturated urethane obtained from polyisocyanates and hydroxyalkyl (meth)acrylate, however, the mold shrinkage is considerable due to the structure of the unsaturated urethane and, as a result, one can obtain only molded products with poor dimensional stability, and surfaces with prominent visual discernment of reinforcing fiber patterns.

If use is made of a low shrinking agent containing known thermoplastic macromolecules in order to reduce the mold shrinkage, there is a phase separation of the low shrinking agent on the surface of the molded product, and thus hardly any preventive effect on the mold shrinkage, the molded product having its surfaces contaminated by the phase-separated low shrinking agent. If a product is obtained by in-mold curing of the aforementioned prior art polymerizable composition containing unsaturated urethane obtainable from polyurethane polyisocyanate and hydroxyalkyl (meth)acrylate, its mold shrinkage is smaller than if unsaturated urethane produced from polyisocyanates and hydroxyalkyl (meth)acrylate is used, and there are some improvements in dimensional stability and surface property, but the degree of such improvements is far from satisfactory. Again, the use of a low shrinking agent with such a polymerisable composition does not lead to any decrease in the mold shrinkage.

U.S. Patent 4,374,229 has proposed polymerizable compositions containing unsaturated urethane and vinyl monomers, obtainable by coupling oligomer polyesters having a hydroxy group at one end and a vinyl group at the other end with polyisocyanate. Even if such polymerizable compositions are used for in-mold curing, one can obtain only products with poor dimensional stability and surface property as in the case of using the prior art polymerizable composition, and the additional use of a low shrinking agent hardly has any effect.

It is therefore an object of the invention in view of the above to provide polymerizable compositions from which products with reduced mold shrinkage and hence improved dimensional stability and surface property can be obtained by in-mold curing, and to provide methods of using such compositions to produce in-mold cured products.

To attain the above and other objects, the present invention discloses the use of a polymerizable composition characterized as containing the unsaturated urethane shown by Formula 1 below, alkyl (meth)-acrylate, and a thermoplastic macromolecular compound capable of dissolving in, or swelling by impregnating, alkyl (meth)acrylate, and a method of producing an in-mold cured product characterized by the step of in-mold curing of such a polymerizable composition at initial mold temperature of 30 - 120 °C in the presence of a radical initiator: (Formula 1)

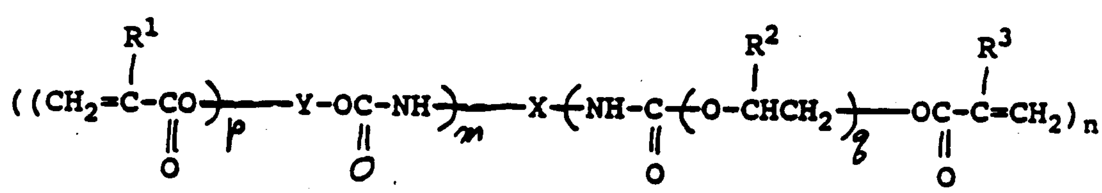

where X is a residue obtainable by removing an isocyanate group from a polyisocyanate having no urethane bond in the molecule; Y is a residue group obtainable by removing a hydroxy group from a polyol; $R^1$, $R^2$ and $R^3$ are same or different, each being H or $CH_3$; m is an integer 1 - 3; n is 0 or 1 such that $2 \leqq m + n$ ; p is 2 or 3; and q is an integer from 1 - 5.

The unsaturated urethane in the above description of the polymerizable compositions according to the present invention is a product of the reaction between between radical polymerizable ester mono-ols and polyisocyanates. Examples of such unsaturated urethanes include Group A urethanes [products of the urethane-producing reaction between radical polymerizable ester mono-ols derived from (meth)acrylic acid and polyhydric alcohols such as trihydric or tetrahydric alcohols, or polyols having 3 or 4 hydroxyl groups in the molecule (such radical polymerizable ester mono-ols being hereinafter referred to simply as ester mono-ols) and polyisocyanate] and Group B urethanes (products of the urethane-producing reaction between polyisocyanate and a hydroxy component including aforementioned ester mono-ol and diol mono-(meth)acrylate).

Examples of the aforementioned ester mono-ols include (1) trihydric alcohol di(meth)acrylates such as glycerine diacrylate, glycerine dimethacrylate, trimethylol propane dimethacrylate, 5-methyl-1,2,4-heptane triol dimethacrylate and.1,2,6-hexane triol dimethacrylate; (2) tetrahydric alcohol tri(meth)acrylates such as pentaerythritol triacrylate and pentaerythritol trimethacrylate; (3) (poly)ether triol di(meth)acrylates such as ethyleneglycol monoglycerylether dimethacrylate, (poly)ethoxylated trimethylol propane dimethacrylate, (poly)propoxylated trimethylol propane diacrylate, and (poly)ethoxylated glycerine dimethacrylate; and (4) (poly)ether tetraol tri(meth)acrylates such as diglycerine triacrylate, -6- (poly)ethoxylated pentaerythritol trimethacrylate, and ethyleneglycol diglycerylether trimethacrylate. The (poly)ether polyols, to be used for deriving such ester mono- ols are preferably those with molecular weight of less than 100 and more preferably less than 80 per hydroxyl group contained in the molecule.

Examples of diol mono(meth)acrylates to be used as aforementioned instead of a portion of ester mono-ol include hydroxyalkyl (meth)acrylates and polyalkyleneglycol mono(meth)acrylates e.g. hydroxyethyl methacrylate, hydroxypropyl acrylate, diethyleneglycol monomethacrylate, and tripropyleneglycol monomethacrylate. The most preferred hydroxyalkyl (meth)acrylate is hydroxyethyl methacrylate, while if a polyalkyleneglycol mono(meth)acrylate is used, the number of oxyalkylene groups is preferably 5 or less. The polyisocyanates to be reacted with the aforementioned radical polymerizable ester mono-ols are those having no urethane bond in the molecule. Examples of such polyisocyanates include (1) diisocyanates such as the tolylene diisocyanates, methylene-bis-(4-phenyl isocyanate), and hexamethylene diisocyanate; (2) triisocyanates such as hexamethylene diisocyanate cyclic trimer; and (3) polyisocyanates such as polymethylene polyphenyl polyisocyanates having an average of more than 3 isocyanate groups in the molecule.

As explained above, the unsaturated urethane for the polymerizable composition of the present invention is a reaction product between a radical polymerizable ester mono-ol and a polyisocyanate, but the present invention is not limited by the method of synthesizing the unsaturated urethane. Unsaturated urethane is usually synthesized in an inactive solvent at 30 - 80 °C in the presence of a catalyst such as a tertiary amine, metallic salt or preferably di-n-butyl tin dilaurate which is well known for the synthesis of polyurethane. It is preferable to adjust the reaction ratio of (polyisocyanate):(radical polymerizable ester mono-ol) at the time of the synthesis to 1:1 as the molar ratio of functional groups (NCO/OH), but no serious ill-effects are observed if this ratio is kept within the range of 1/0.95 to 0.95/1.

Examples of unsaturated urethanes in Group A thus synthesized include the product of the reaction between 2 moles of glycerine dimethacrylate and 1 mole of tolylene diisocyanate; the product of the reaction between 2 moles of trimethylol propane dimethacrylate and 1 mole of tolylene diisocyanate; and the product of the reaction between 2 moles of glycerine dimethacrylate and 1 mole of hexamethylene diisocyanate. Examples of those in Group B include the products of the reactions between: (i) 1 mole of glycerine dimethacrylate, 1 mole of 2-hydroxyethyl methacrylate and 1 mole of tolylene diisocyanate; (ii) 1 mole of ethyleneglycol monoglycerylether dimethacrylate, 1 mole of 2-hydroxyethyl methacrylate and 1 mole of tolylene diisocyanate; (iii) 2 moles of glycerine dimethacrylate, 1.5 moles of diethyleneglycol monomethacrylate and 1 mole of polymethylene polyphenyl polyisocyanate (average 3.5 NCO groups); (iv) 1 mole of tripropyleneglycol monoglycerylether dimethacrylate, 1 mole of 2-hydroxyethyl methacrylate and 1 mole of tolylene diisocyanate; and, (v) 1 mole of ethyleneglycol monoglycerylether dimethacrylate, 1 mole of dipropyleneglycol monomethacrylate and 1 mole of tolylene diisocyanate.

Regarding the polymerizable compositions of the present invention, examples of alkyl (meth)acrylates include:[(i) lower alkyl acrylates such as methyl acrylate, ethyl acrylate and isopropyl acrylate]; and (ii) lower alkyl methacrylates such as methyl methacrylate, ethyl methacrylate and isopropyl methacrylate. These alkyl (meth)acrylates may be used singly or as a mixture of two or more, but the use of methyl

methacrylate is particularly preferable. In connection with the polymerizable compositions of the present invention, the thermplastic macromolecular compounds serve the purpose of preventing mold shrinkage and thereby providing molded products with improved dimensional stability and surface property. There is no particular limitation regarding these thermoplastic macromolecular compositions as long as they dissolve in, or swell by impregnating, the aforementioned alkyl (meth)acrylate. Examples of such thermoplastic macromolecular compound include: (i) polymethacrylates such as polymethyl methacrylate, polyethyl methacrylate and polyisobutyl methacrylate; (ii) aromatic vinyl polymers such as styrene- divinyl benzene copolymer, styrene-butadiene block copolymer and styrene-acrylonitrile block copolymer; (iii) polyvinyl esters such as polyvinyl acetate and polyvinyl benzoate; and (iv) aliphatic polyesters such as polypropylene adipate and poly $\epsilon$-caprolactone, but polymethyl methacrylate, polyvinyl acetate, polystyrene and styrene-divinyl benzene copolymer are preferable.

As explained above, the polymerizable compositions of the present invention are characterized as containing unsaturated urethane, alkyl (meth)acrylate and thermoplastic macromolecular compound. The ratio (in weight) of their contents (unsaturated urethane):(alkyl (meth)acrylate) is from 10:90 to 90:10 and more preferably from 40:60 to 75:25. The ratio (unsaturated urethane + alkyl (meth)acrylate):(thermoplastic macromolecular compound) is from 100:1 to 1:1, and more preferably from 20:1 to 2:1,

According to the present invention, inorganic filler materials of known kinds in powder form may additionally be contained by the aforementioned polymerizable composition. Their content varies, depending on their kinds, sizes, the method of moulding of the polymerizable composition and the physical property desired for the molded products thus produced, such as fire-resistance, but the weight ratio (unsaturated urethane + alkyl (meth)acrylate):(inorganic powder filler) is from 100:40 to 100:230. Examples of inorganic powder fillers that may be used include $Al_2O_3.3H_20$, calcium carbonate, silica and $CaSO_4.2H_20$, inorganic powder fillers with water of crystallization, and $Al_20_3.3H_20$ in particular, being preferable for improving the fire-resistance of obtained molded products. If use is made of $Al_2O_3.3H_20$, the fire-resistance of the obtained molded products can be greatly improved at a weight ratio of (unsaturated urethane + alkyl (meth)acrylate): ($Al_20_3.3H_20$) of approximately 100:65.

In a production method according to the present invention, use may be made of a radical initiator such as an organic peroxide in order to carry out in-mold curing of the forementioned polymerizable compositions. Examples of such organic peroxide include: (1) diacyl peroxides such as dilauroyl peroxide, dibenzoyl peroxide and substituted benzoyl peroxide having a substituted group such as methyl group or methoxy group; (2) alkyl peroxy carboxylates such as t-butyl peroxy octoate, and t-butyl peroxy benzoate; (3) diaryl peroxides and dialkyl peroxides such as dicumyl peroxide, di-t-butyl peroxide, and 1,1- is(t-butyl peroxy)-3,3,5-trimethyl cyclohexane; and (4) peroxy carbonates such as t-butyl peroxy-2-ethylhexyl carbonate.

In a production method according to the present invention, use may also be made of a curing accelerator together with a radical initiator. Examples of such curing accelerators include aromatic tertiary amines such as dimethyl aniline and dimethyl-p-toluidine.

There are no particular limitations as to the amounts of such radical initiators and curing accelerators that may be used according to the method of the present invention. The amount of radical initiators to be used is generally 0.2 - 2 weight parts per 100 weight parts of the sum of unsaturated urethane and alkyl (meth)acrylate. The amount of curing accelerator to be used depends on the temperature of molding as well as on the kinds of unsaturated urethane, alkyl (meth)acrylate and the radical initiator, but is usually no more than 1 weight part per 100 weight parts of the sum of unsaturated urethane and alkyl (meth)acrylate. In the case of in-mold curing at an initial mold temperature of less than 50°C it is advantageous to make additional use of a curing accelerator, in order to increase the speed of curing.

The method of curing applicable to the method of the present invention is not particularly limited as long as it is a molding method by in-mold curing. Particularly advantageous molding methods include resin transfer- molding (RTM), casting molding and reaction injection molding (RIM). According to one of the methods for using these processes, a solution in which a mixture of specified amounts of unsaturated urethane, alkyl (meth)acrylate, thermoplastic macromolecular compounds and a curing accelerator is dissolved and another solution of a radical initiator are prepared, a measuring pump is used to transfer them at a specified ratio, the solutions are mixed together by means of a static mixer and thereafter the mixture is placed inside a mold to obtain a molded product by in-mold curing.

Within the scope of the present invention, reinforcing fibers such as a glass fiber mat, woven material and strands may be preliminarily set inside the mold into which polymerizable compositions are transferred so as to obtain a molded product reinforced by such material.

In connection with the present invention, "initial mold temperature" means the temperature at which the mold is preliminarily kept before a polymerizable composition is transferred thereinto. The initial mold temperature is from 30°C to 120°C and more preferably from 30°C to 80°C. Molded products with the

most improved dimensional stability and surface property can be obtained if methyl methacrylate is used as as the alkyl (meth)acrylate and the initial mold temperature is from 60 °C to 80 °C.

An essential point in the present invention is to make use of (i) a radical polymerizable ester mono-ol having as its essential component an ester mono-ol which is derived from a (meth)acrylic acid and a polyhydric alcohol such as a trihydric or tetrahydric alcohol, or a polyol having three or four hydroxyl groups in the molecule and has 2 - 3 radical polymerizable groups in the molecule; and (2) a polyisocyanate having no urethane bonds in the molecule. An unsaturated urethanes according to the present invention has at least three radical polymerizable groups in the molecule and the number of double bonds within its molecule is much greater, and the molecular weight per double bond is lower, than in the kinds of unsaturated urethane previously considered. According to the present invention, therefore, the density per unit volume of double bonds based on unsaturated urethane increases in a polymerizable composition even if the content of unsaturated urethane is the same. Thus, the density of cross links can be increased in molded products and the effect of a low shrinking agent can be enhanced. For the purpose of making a low shrinking agent more effective, it is preferable that the molecular weight of unsaturated urethane per double bond be no greater than 250, and more preferably no greater than 220.

Description of Experiments

Part 1 (Synthesis of unsaturated urethane and preparation of a liquid substance)

Preparation of unsaturated urethane "A" and liquid "a"

Taken in a flask were 109.6 weight parts of polymethylene polyphenyl polyisocyanate containing an average of 3.5 isocyanate groups in the molecule, 204.9 weight parts of methyl methacrylate and 0.9 weight parts of di-n-butyl tin dilaurate. It was stirred while being maintained at 50 °C and 197.8 weight parts of glycerine dimethacrylate were dropped over a period of 15 minutes. Although the reaction was exothermic, the temperature inside the flask was maintained below 60 °C. The synthesis was completed thereafter by keeping it at 60 °C for one hour. Liquid "a" containing unsaturated urethane "A" by 60 weight % was thus obtained.

Preparation of unsaturated urethane "B" and liquid "b"

Taken in a flask were 87.1 weight parts of 2,4- and 2,6- mixed tolylene diisocyanate, 210.2 weight parts of methyl methacrylate and 0.9 weight parts of di-n-butyl tin dilaurate. The mixture was stirred while being maintained at 50 °C and 228.2 weight parts of glycerine dimethacrylate were dropped over a period of 20 minutes. Although the reaction was exothermic, the temperature inside the flask was maintained in the range of 55 - 60 °C. It was thereafter kept at 60 °C for a period of 1.5 hours to complete the synthesis. Liquid "b" containing 60 weight % of unsaturated urethane "B" was thus obtained.

Preparation of unsaturated urethane "C" and liquid "c"

Taken in a flask were 87.1 weight parts of the same mixed tolylene diisocyanate as used for the synthesis of unsaturated urethane "B", 192.1 weight parts of methyl methacrylate and 1.0 weight part of di-n-butyl-tin-laurate. It was stirred while being maintained at 50 °C and a mixture of 136.1 weight parts of ethylene glycol monoglycerylether dimethacrylate and 65.0 parts of 2- hydroxyethyl methacrylate was dropped over a period of 30 minutes. Although the reaction was exothermic, the temperature inside the flask was maintained below 60 °C. It was thereafter kept at 60 °C for a period of 1.5 hours to complete the synthesis. Liquid "c" containing 60 weight % of unsaturated urethane "C" was thus obtained.

Preparation of unsaturated urethane "R-1" and liquid "r-1"

Liquid "r-1" containing unsaturated urethane "R-1" at 60 weight % was obtained in the same way as the synthesis of unsaturated urethane "A" except use was made of 112.7 weight parts of 2-hydroxyethyl methacrylate instead of 197.8 weight parts of glycerine dimethacrylate and 148.2 weight parts instead of 204.9 weight parts of methyl methacrylate.

Preparation of unsaturated urethane "R-2" and liquid "r-2"

Taken in the flask were 120 weight parts of polypropylene glycol (with average molecular weight of 600), 66 weight parts of methyl methacrylate and 0.8 weight parts of di-n- butyl tin dilaurate. It was stirred while being maintained at 50 °C, and a solution obtained by dissolving 52 weight parts of the same mixed tolylene diisocyanate as used for the synthesis of unsaturated urethane "B" in 66 weight parts of methyl methacrylate was dropped over a period of 30 minutes. Although the reaction was exothermic, the temperature inside the flask was maintained within the range of 50 - 60 °C. It was thereafter kept at 60 °C for a period of 2 hours to complete the synthesis. What was thus obtained was a methyl methacrylate solution of polyurethane polyisocyanate with an average molecular weight of 1720 and having an average of 2 isocyanate groups in the molecule. Next, 0.5 weight parts of di-n-butyl tin laurate were added to the methyl methacrylate solution of polyurethane polyisocyanate obtained above and the mixture stirred while being kept at 50 °C. Thereafter, 26 weight parts of 2-hydroxyethyl methacrylate were dropped over a period of 15 minutes while the interior temperature of the flask was maintained within the range of 55 - 60 °C. It was further maintained at 60 °C for 1 hour and 30 minutes to complete the synthesis. Liquid "r-2" containing 60 weight % of unsaturated urethane "R-2" was thus obtained.
In addition, Liquids "d" to "i" respectively containing unsaturated urethane "D" to "I" in 60 weight % were obtained similarly to the synthesis of unsaturated urethane "A". The types of polyisocyanate and radical polymerizable ester mono-ol used for the syntheses, as well as the amounts in which they were used, are shown in Table 1. Characteristics of the synthesized unsaturated urethane are shown in Table 2.

Part 2 (Preparation of polymerizable compositions, production of molded products by resin transfer molding (RTM) and their evaluation) Preparation of polymerizable compositions

The liquids containing unsaturated urethanes obtained in Part 1, a solution of thermoplastic macromolecular compound dissolved in methyl methacrylate, $Al_2O_3.3H_2O$, N,N-dimethyl-p-toluidine as curing accelerator, and a mold releasing agent was stirred uniformly to prepare the polymerizable compositions shown in Table 3.

Production of molded products

A glass strand continuous mat (Unifilo U-750, produced by Nihon Denki Garasu Company, Limited) was charged into a nickel metallized flat mold, heated to 60 °C such that the glass content would become 25%, and the mold was tightened to 2.5 kg/cm$^2$. Fixed amounts of each of the polymerizable compositions prepared as above and a radical initiator solution were separately brought together by means of a measuring pump and the two liquids were passed through a static mixer to be mixed uniformly and poured into the mold. The pouring was stopped at the point of time when the poured liquid began to flow out of the clearance opposite from the liquid intake. The product was removed from the mold 20 minutes after the pouring was stopped to obtain a molded product.

Evaluation of molded products

The appearance of each product was evaluated visually regarding fiber patterns and occurrence of cracks. They were evaluated according to the following standards:

A: None
B: Present a little
C: Present
D: Present a lot

The results of evaluation are shown also in Table 3.

Part 3 (Preparation of polymerizable compositions, production of molded products by casting molding and their evaluation)

Preparation of polymerizable compositions

The liquids containing unsaturated urethanes obtained in Part 1, a solution of a thermoplastic macromolecular compound dissolved in methyl methacrylate, N,N-dimethyl-p-toluidine as curing accelerator and a mold releasing agent was stirred uniformly to obtain the polymerizable compositions shown in Table 4. This

polymerizable composition was degassed for one hour under the conditions of 25 °C and reduced pressure, and was used for the production of molded products.

Production of molded products

A mold with a clearance of 3mm was constructed by sandwiching a polyethylene tube of outer diameter 5mm with two glass sheets (25cm x 25cm) of thickness 5mm. The degassed polymerizable composition was poured into this mold and a molded product was produced by keeping this mold inside a tank at constant temperature of 35 °C for one hour and leaving it for 12 hours thereafter at 80 °C.

Evaluation of molded products

Each molded product thus obtained was cut to a length of 80mm and width of 25mm to produce test pieces. The length, width and height of each test piece at 25 °C were measured accurately to calculate its volume, and its weight was also accurately measured for calculating the density of the molded product at 25 °C. The density at 25 °C of the degassed polymerizable composition from which the molded product was obtained was also measured separately. Shrinkage was calculated from these measured values according to the following formula: Shrinkage (%) = [(Density of molded product) - (Density of degassed polymerizable composition)]/(Density of molded product) x 100. The results are also shown in Table 4.

Part 4 (Preparation of polymerizable compositions, production of molded products by compression molding and their evaluation)

Preparation of polymerizable compositions

The liquid containing unsaturated urethane obtained in Part 1 and a solution of a low shrinking agent obtained by dissolving 30 weight parts of polymethyl methacrylate (Acrypet M produced by Mitsubishi Rayon Company, Limited) in 70 weight parts of methyl methacrylate was mixed as shown in Table 5. To 100 weight parts of this mixed liquid, 1 weight part of dibenzoyl peroxide, 4 weight parts of zinc stearate and 186 weight parts of inorganic powder filler material were added and they were mixed together by means of a kneader. The polymerizable composition thus obtained was a paste-like premix.

Production of molded products

A molded product was produced from the polymerizable composition thus obtained by using an SMC mold and a compression molding apparatus for one minute of compression molding at initial mold temperature of 80 °C.

Evaluation of molded products

For each molded product thus obtained, its linear shrinkage was calculated by the following formula: Linear shrinkage (%) = [(Longitudinal dimension of the mold) - (Longitudinal dimension of the molded product)]/(Longitudinal dimension of the mold)) x 100. The results are shown in Table 5.

As can be seen clearly in the above, the present invention has the desirable effect of providing molded products with improved dimensional stability and surface property.

Table 1

| Unsaturated urethane (Type) | Polyisocyanate (Type and amount) | Radical polymerizable ester mono-ol (Type and amount) | Methyl methacrylate (Amount) |
|---|---|---|---|
| A | MPI: 109.6/0.245 | **1 197.8/0.867 | 204.9 |
| B | TDI: 87.1/0.5 | **1 228.2/1.0 | 210.2 |
| C | TDI: 87.1/0.5 | **2 136.1/0.5 **3 65.0/0.5 | 192.1 |
| D | TDI: 87.1/0.5 | **1 114.1/0.5 **3 65.0/0.5 | 264.6 |
| E | HMDI: 84.0/0.5 | **1 228.2/1.0 | 208.1 |
| F | TDI: 87.1/0.5 | **2 136.1/0.5 **3 65.0/0.5 | 192.1 |
| G | MPI: 109.6/0.245 | **1 111.8/0.49 **4 63.9/0.37 | 190.2 |
| H | TDI: 87.1/0.5 | **5 201.1/0.5 **3 65.0/0.5 | 235.5 |
| I | TDI: 87.1/0.5 | **2 136.1/0.5 **6 101.0/0.5 | 216.2 |
| R-1 | MPI: 109.6/0.245 | **3 112.7/0.867 | 148.2 |
| R-2 | *1: 172/0.1 | **3 26/0.2 | 132 |

(Notes to Table 1):

Regarding "Amount", the number above "/" indicates the weight part and the number below "/" indicates mole;

MPI: Polymethylene polyphenyl polyisocyanate (Average 3.5 NCO);

TDI: Tolylene diisocyanate;

HMDI: Hexamethylene diisocyanate;

*1: Reaction product of {TDI/polypropylene glycol (average molecular weight = 600)} = 3/2 (molar ratio);

**1: Glycerine dimethacrylate;

**2: Ethyleneglycol monoglycerylether dimethacrylate;

**3: 2-hydroxyethyl methacrylate;

**4: Diethyleneglycol monomethacrylate;

**5: Tripropyleneglycol monoglycerylether dimethacrylate;

**6: Dipropyleneglycol monomethacrylate

Table 2

| Type | Molecular Weight | Number of double bonds in molecule | Molecular weight per double bond |
|---|---|---|---|
| A | 1244.5 | 7.0 | 177.8 |
| B | 630 | 4.0 | 157.5 |
| C | 576 | 3.0 | 192.0 |
| D | 532 | 3.0 | 177.3 |
| E | 624 | 4.0 | 156.0 |
| F | 576 | 3.0 | 192.1 |
| G | 1164 | 5.5 | 211.6 |
| H | 706 | 3.0 | 235.3 |
| I | 648 | 3.0 | 216.0 |
| R-1 | 901.5 | 3.5 | 257.6 |
| R-2 | 1980 | 2.0 | 990.0 |

Table 3

| | Test Examples 1 | 2 | 3 | 4 | Comparison Examples 1 | 2 | 3 | 4 | 5 |
|---|---|---|---|---|---|---|---|---|---|
| (Polymerizable composition) Unsaturated urethane liquid type | a | b | c | d | r-1 | r-2 | r-1 | r-2 | c |
| Weight part | 100 | 100 | 100 | 100 | 100 | 100 | 100 | 100 | 100 |
| $Al_2O_3 \cdot 3H_2O$ | 50 | 50 | 50 | 50 | 50 | 50 | 50 | 50 | 50 |
| N,N-dimethyl-p-toluidine | 0.03 | 0.03 | 0.03 | 0.03 | 0.03 | 0.03 | 0.03 | 0.03 | 0.03 |
| Mold releasing agent | 0.5 | 0.5 | 0.5 | 0.5 | 0.5 | 0.5 | 0.5 | 0.5 | 0.5 |
| *2 | **7 40 | **8 40 | **9 40 | **7 40 | -- -- | -- -- | **7 40 | **7 40 | -- -- |
| (Radical initiator) *3 | 2 | 2 | 2 | 2 | 2 | 2 | 2 | 2 | 2 |
| (Results) Fiber patterns | A | A | A | A | D | C | C | C | D |
| Cracks | A | A | A | A | D | B | C | B | D |

(Notes)

Mold releasing agent: Mold Wiz (produced by Kozakura Shokai Company Limited);

*2: Solution of thermoplastic macromolecular compound in methyl methacrylate (type/weight part)

*3: 50% solution of dibenzoyl peroxide;

**7: Solution with 30 weight parts of polymethyl methacrylate dissolved in 70 weight parts of methyl methacrylate (molecular weight = 50,000) dissolved in 70 weight parts of methyl

**8: Solution with 40 weight parts of polyvinyl acetate (molecular weight = 200,000) dissolved in 60 weight parts;

**9: 60 weight parts of methyl methacrylate dispersed and swollen by impregnation with 40 weight parts of powdered styrene-divinyl benzene copolymer;

Molded product from Comparison Example 3 had on its surface patched patterns of phase-separated thermoplastic macromolecular compound used as low shrinking agent

Table 4

| | Test Examples | | | | Comparison Examples | | | | |
|---|---|---|---|---|---|---|---|---|---|
| | 5 | 6 | 7 | 8 | 6 | 7 | 8 | 9 | 10 |
| (Polymerizable composition) | | | | | | | | | |
| Unsaturated urethane liquid type | a | b | c | d | r-1 | r-2 | r-1 | r-2 | c |
| Weight part | 100 | 100 | 100 | 100 | 100 | 100 | 100 | 100 | 100 |
| N,N-dimethyl-p-toluidine | *4 | *4 | *4 | *4 | *4 | *4 | *4 | *4 | *4 |
| Mold releasing agent | 0.5 | 0.5 | 0.5 | 0.5 | 0.5 | 0.5 | 0.5 | 0.5 | 0.5 |
| *2 | **7 | **8 | **9 | **7 | -- | -- | **7 | **7 | -- |
| | 40 | 40 | 40 | 40 | -- | -- | 40 | 40 | -- |
| (Radical initiator) | | | | | | | | | |
| *3 | 2 | 2 | 2 | 2 | 2 | 2 | 2 | 2 | 2 |
| (Results) | | | | | | | | | |
| shrinkage | 1.5 | 1.2 | 2.4 | 2.6 | 13.1 | 7.5 | 7.8 | 7.5 | 13.8 |

(Notes)

See Notes to Table 3 regarding the unsaturated urethane liquid, mold releasing agent, *2, *3, **7, **8 and **9;

*4: 0.075;

Molded product from Comparison Example 8 had on its surface patched patterns of phase-separated thermoplastic macromolecular compound used as low shrinking agent.

Table 5

| | Liquid of unsaturated urethane | | Added Solution of low shrinking agent | Type of Inorganic powder filler | Linear shrinkage of molded product % |
|---|---|---|---|---|---|
| | Type | Wt part | Wt part | | |
| (Test Examples) | | | | | |
| 9 | a | 80 | 20 | $Al_2O_3 \cdot 3H_2O$ | 0,79 |
| 10 | a | 70 | 30 | $Al_2O_3 \cdot 3H_2O$ | 0.59 |
| 11 | a | 60 | 40 | $Al_2O_3 \cdot 3H_2O$ | 0.49 |
| 12 | b | 70 | 30 | Calcium carbonate | 0.41 |
| 13 | b | 60 | 40 | Calcium carbonate | 0.27 |
| 14 | b | 50 | 50 | Calcium carbonate | 0.20 |
| 15 | f | 80 | 20 | $Al_2O_3 \cdot 3H_2O$ | 0.81 |
| 16 | f | 70 | 30 | $Al_2O_3 \cdot 3H_2O$ | 0.62 |
| 17 | f | 60 | 40 | $Al_2O_3 \cdot 3H_2O$ | 0.54 |
| 18 | i | 70 | 30 | Calcium carbonate | 0.59 |
| 19 | i | 60 | 40 | Calcium carbonate | 0.40 |
| 20 | i | 50 | 50 | Calcium carbonate | 0.31 |
| (Comparison Examples) | | | | | |
| 11 | r-1 | 100 | 0 | $Al_2O_3 \cdot 3H_2O$ | 1.21 |
| 12 | r-1 | 80 | 20 | $Al_2O_3 \cdot 3H_2O$ | 0.93 |

(Notes)
$Al_2O_3 \cdot 3H_2O$: B-703 produced by Nippon Keikinzoku Company, Limited with average particle size of 0.4μm;
Calcium carbonate: SS80 produced by Nitto Funka Kogyo Company, Limited with average particle size of 2.6μm

## Claims

**1.** A polymerizable composition comprising unsaturated urethane shown by Formula 1 below; alkyl (meth)-acrylate, and

a thermoplastic macromolecular compound capable of dissolving in, or swelling by impregnating, said alkyl (meth)acrylate,

said unsaturated urethane, said alkyl (meth)acrylate and said thermoplastic macromolecular compound being contained at weight ratios of (said unsaturated urethane): { said alkyl (meth)acrylate} from 10:90 to 90:10 and {(said unsaturated urethane) + (said alkyl (meth)acrylate)}: {said thermoplastic macromolecular compound} from 100:1 to 1:1 : (Formula 1)

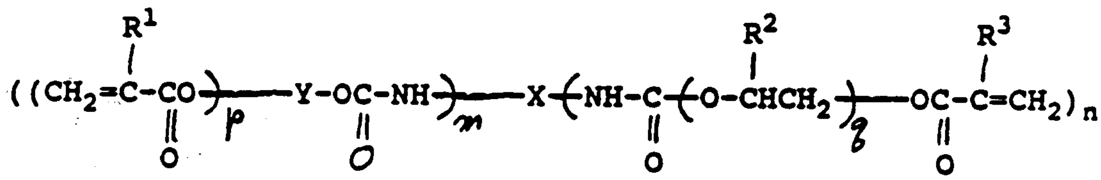

where X is a residue obtainable by removing isocyanate group from polyisocyanate having no urethane bond in the molecule; Y is a residue obtainable by removing a hydroxy group from a tri or tetra hydric polyol; $R^1$, $R^2$ and $R^3$ are same of different, each being H or $CH_3$; m is an integer from 1 to 3; n is 0 or 1 such that $2 \leq m + n \leq 4$; p is 2 or 3; and q is an integer from 1 to 5.

**2.** The polymerizable composition of Claim 1 further comprising an inorganic powder filler at such weight ratio that {(said unsaturated urethane) + (said alkyl (meth)acrylate)} : {said inorganic powder filler} is from 100/40 to 100:230.

**3.** The polymerizable composition of Claim 2 wherein said inorganic powder filler comprises $Al_2O_3 \cdot 3H_2O$.

**4.** A method of producing a molded product by in-mold curing comprising the steps of
providing a mold at initial temperature of from 30 to 120 °C, and
causing a polymerizable composition to be cured inside said mold in the presence of a radical initiator,
said polymerizable composition comprising:
unsaturated urethane shown by Formula 1 below;
alkyl (meth)acrylate, and
a thermoplastic macromolecular compound capable of dissolving in, or swelling by impregnating, said alkyl (meth)acrylate,
said unsaturated urethane, said alkyl (meth)acrylate and said thermoplastic macromolecular compound being contained at weight ratios of (said unsaturated urethane): (alkyl (meth)acrylate) from 10:90 to 90:10 and {(said unsaturated urethane) + (said alkyl (meth)acrylate)} : {said thermoplastic marcomolecular compound} is from 100:1 to 1:1 : (Formula I)

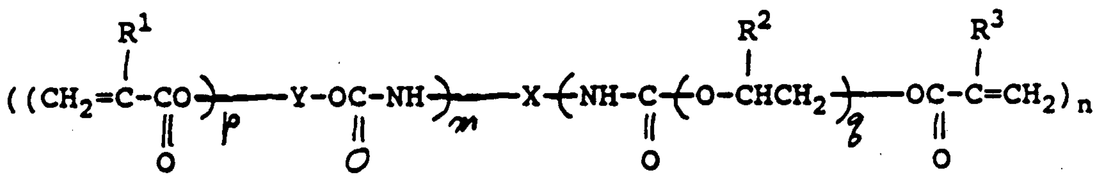

where X is a residual group obtainable by removing isocyanate group from polyisocyanate having no urethane bond in the molecule; Y is a residual group obtainable by removing a hydroxy group from a tri or tetra hydric polyol ; $R^1$, $R^2$ and $R^3$ are same of different, each being H or $CH_3$; m is an integer from 1 to 3; n is 0 or 1 such that $2 \leqq m + n \leqq 4$; p is 2 or 3; and q is an integer from 1 to 5.

**5.** The method of Claim 4 wherein said polymerizable composition further comprises an inorganic powder filler at such weight ratio that {(said unsaturated urethane) + (said alkyl (mth)acrylate)} : {said inorganic powder filler} is from 100:40 to 100:230.

**6.** The method of Claim 5 wherein said inorganic powder filler comprises $Al_2O_3 \cdot 3H_2O$.

**7.** The method of any of Claims 4 to 6 further comprising the step of preliminarily placing reinforcing fibers inside said mold.

**Patentansprüche**

**1.** Polymerisierbare Zusammensetzung mit einem unten in Formel 1 angegebenen ungesättigten Harnstoff, einem Alkyl(meth)acrylat und einer thermoplastischen makromolekularen Verbindung, die in dem Alkyl(meth)acrylat löslich oder durch Imprägnieren mit dem Alkyl(meth)acrylat quellbar ist, wobei der ungesättigte Harnstoff, das Alkyl(meth)acrylat und die thermoplastische makromolekulare Verbindung in Gewichtsverhältnissen enthalten sind, in denen das Verhältnis (ungesättigter Harnstoff):(Alkyl(meth)-acrylat) im Bereich von 10:90 bis 90:10 und das Verhältnis (ungesättigter Harnstoff + Alkyl(meth)-acrylat):(thermoplastische makromolekulare Verbindung) im Bereich von 100:1 bis 1:1 liegt:
(Formel 1)

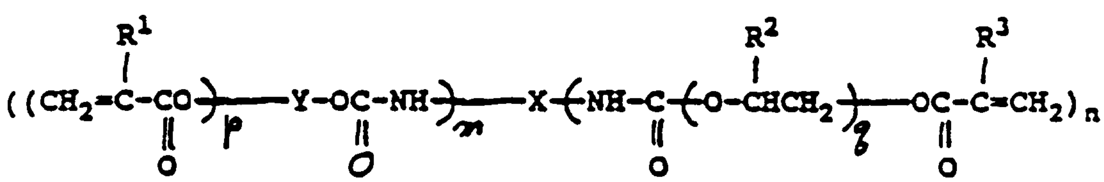

worin X ein durch Entfernen einer Isocyanatgruppe aus einem keine Harnstoffbindung im Molekül aufweisenden Polyisocyanat erhältlicher Rest ist; Y ein durch Entfernen einer Hydroxygruppe aus einem drei- oder vierwertigen Polyol erhältlicher Rest ist; $R^1$, $R^2$ und $R^3$ gleich oder verschieden und jeweils H oder $CH_3$ sind; m eine ganze Zahl von 1 bis 3 ist; n 0 oder 1 ist, so daß $2 \leqq m+n \leqq 4$ ist; p 2 oder 3 ist; und q eine ganze Zahl von 1 bis 5 ist.

2. Polymerisierbare Zusammensetzung nach Anspruch 1, die ferner einen anorganischen Pulverfüllstoff in einer solchen Menge umfaßt, daß das Gewichtsverhältnis (ungesättigter Harnstoff + Alkyl(meth)-acrylat):(anorganischer Pulverfüllstoff) im Bereich von 100:40 bis 100:230 liegt.

3. Polymerisierbare Zusammensetzung nach Anspruch 2, dadurch gekennzeichnet, daß der anorganische Pulverfüllstoff $Al_2O_3 \cdot 3H_2O$ umfaßt.

4. Verfahren zur Herstellung eines geformten Produkts durch Aushärten in einer Form, welches die folgenden Schritte umfaßt:
Bereitstellen einer Form bei einer Ausgangstemperatur von 30 bis 120 °C; und
Aushärten einer polymerisierbaren Zusammensetzung innerhalb der Form in Gegenwart eines Radikalstarters, wobei die polymerisierbare Zusammensetzung umfaßt:
einen unten in Formel 1 angegebenen ungesättigten Harnstoff;
ein Alkyl(meth)acrylat; und
eine thermoplastische makromolekulare Verbindung, die in dem Alkyl(meth)acrylat löslich oder durch Imprägnieren mit dem Alkyl(meth)acrylat quellbar ist,
wobei der ungesättigte Harnstoff, das Alkyl(meth)acrylat und die thermoplastische makromolekulare Verbindung in Gewichtsverhältnissen enthalten sind, in denen das Verhältnis (ungesättigter Harnstoff):-(Alky(meth)acrylat) im Bereich von 10:90 bis 90:10, und das Verhältnis (ungesättigter Harnstoff + Alkyl-(meth)acrylat):(thermoplastische makromolekulare Verbindung) im Bereich von 100:1 bis 1:1 liegt:
(Formel 1)

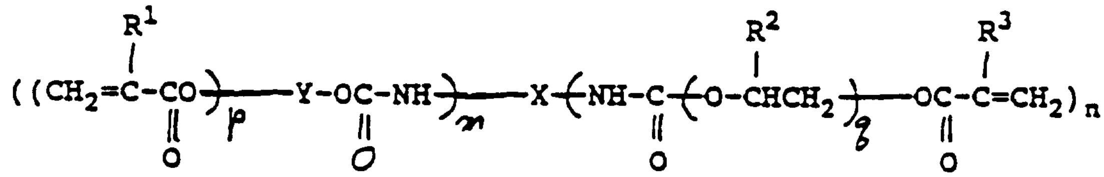

worin X eine durch Entfernen einer Isocyanatgruppe aus einem keine Urethanbindung im Molekül aufweisenden Polyisocyanat erhältliche Restgruppe ist; Y eine durch Entfernen einer Hydroxygruppe aus einem drei- oder vierwertigen Polyol erhältliche Restgruppe ist; $R^1$, $R^2$ und $R^3$ gleich oder verschieden und jeweils H oder $CH_3$ sind; m eine ganze Zahl von 1 bis 3 ist; n 0 oder 1 ist, so daß $2 \leqq m+n \leqq 4$ ist; p 2 oder 3 ist; und q eine ganze Zahl von 1 bis 5 ist.

5. Verfahren nach Anspruch 4, dadurch gekennzeichnet, daß die polymerisierbare Zusammensetzung ferner einen anorganischen Pulverfüllstoff in einer solchen Menge umfaßt, daß das Gewichtsverhältnis (ungesättigter Harnstoff + Alkyl(meth)acrylat):(anorganischer Pulverfüllstoff) im Bereich von 100:40 bis 100:230 liegt.

6. Verfahren nach Anspruch 5, dadurch gekennzeichnet, daß der anorganische Pulverfüllstoff $Al_2O_3 \cdot 3H_2O$ umfaßt.

7. Verfahren nach einem der Ansprüche 4 bis 6, ferner gekennzeichnet durch den Schritt, daß vorher innerhalb der Form verstärkende Fasern angeordnet werden.

## Revendications

1. Composition polymérisable comprenant un uréthane insaturé indiqué par la Formule 1 ci-dessous, un (méth)acrylate d'alkyle et un composé macromoléculaire thermoplastique capable de se dissoudre, ou de se gonfler par imprégnation, dans ledit (méth)acrylate d'alkyle,

ledit uréthane insaturé, ledit (méth)acrylate d'alkyle et ledit composé macromoléculaire thermoplastique étant contenus dans des rapports en poids de (dit uréthane insaturé) : (dit (méth)acrylate d'alkyle) allant de 10:90 à 90:10 et de {(dit uréthane insaturé) + (dit (méth)acrylate d'alkyle)} : {dit composé macromoléculaire thermoplastique} allant de 100:1 à 1:1 : Formule 1

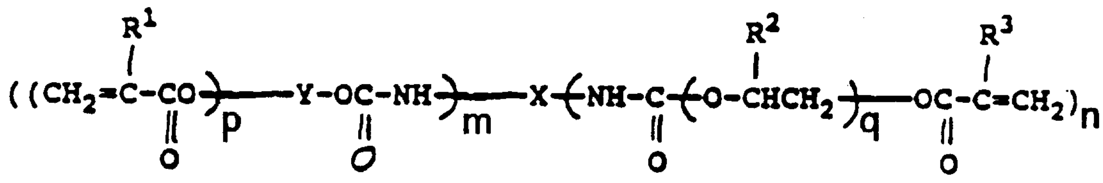

dans laquelle X est un résidu qui peut être obtenu par élimination du groupe isocyanate d'un polyisocyanate dont la molécule ne contient pas de liaison uréthane; Y est un résidu qui peut être obtenu par élimination d'un groupe hydroxyle d'un polyol tri- ou tétra-hydrique; $R^1$, $R^2$ et $R^3$ sont identiques ou différents, et sont chacun H ou $CH_3$; m est un nombre entier de 1 à 3; n est 0 ou 1 tel que $2 \leqq m + n \leqq 4$: p est 2 ou 3; et q est un nombre entier de 1 à 5.

**2.** Composition polymérisable de la Revendication 1 comprenant en outre une matière de charge qui est une poudre inorganique dans un rapport en poids tel que {(dit uréthane insaturé) + (dit (méth)acrylate d'alkyle)} : (dite matière de charge qui est une poudre inorganique) soit de 100:40 à 100:230.

**3.** Composition polymérisable de la Revendication 2, dans laquelle ladite matière de charge qui est une poudre inorganique comprend $Al_2O_3$, $3H_2O$.

**4.** Procédé de production d'un produit moulé par durcissement dans le moule comprenant les étapes consistant à:

alimenter un moule à une température initiale de 30 à 120 °C, et

faire en sorte qu'une composition polymérisable soit durcie à l'intérieur dudit moule en présence d'un initiateur radicalaire,

ladite composition polymérisable comprenant:

un uréthane insaturé indiqué par la Formule 1 ci-dessous;

un (méth)acrylate d'alkyle, et

un composé macromoléculaire thermoplastique capable de se dissoudre, ou de se gonfler par imprégnation, dans ledit (méth)acrylate d'alkyle,

ledit uréthane insaturé, ledit (méth)acrylate d'alkyle et ledit composé macromoléculaire thermoplastique étant contenus dans des rapports en poids de (dit uréthane insaturé) : (dit (méth)acrylate d'alkyle) allant de 10:90 à 90:10 et de {(dit uréthane insaturé) + (dit (méth)acrylate d'alkyle)} : {dit composé macromoléculaire thermoplastique} allant de 100:1 à 1:1 :

Formule 1

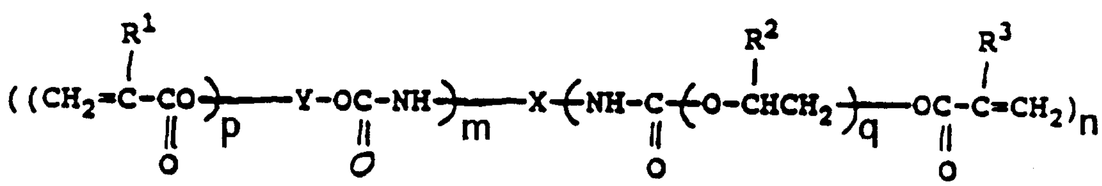

dans laquelle X est un groupe résiduel qui peut être obtenu par élimination du groupe isocyanate d'un polyisocyanate dont la molécule ne contient pas de liaison uréthane; Y est un groupe résiduel qui peut être obtenu par élimination d'un groupe hydroxyle d'un polyol tri- ou tétra-hydrique; $R^1$, $R^2$ et $R^3$ sont identiques ou différents, et sont chacun H ou $CH_3$; m est un nombre entier de 1 à 3; n est 0 ou 1 tel que $2 \leqq m + n \leqq 4$; p est 2 ou 3; et q est un nombre entier de 1 à 5.

**5.** Procédé selon la Revendication 4, dans lequel ladite composition polymérisable contient en outre une matière de charge qui est une poudre inorganique dans un rapport en poids tel que {(dit uréthane insaturé) + (dit (méth)acrylate d'alkyle)} : (dite matière de charge qui est une poudre inorganique) soit de 100:40 à 100:230.

6. Procédé selon la Revendication 5, dans lequel ladite matière de charge qui est une poudre inorganique comprend $Al_2O_3$, $3H_2O$.

7. Procédé selon l'une quelconque des Revendications 4 à 6 comprenant en outre l'étape consistant à disposer préalablement des fibres de renforcement à l'intérieur dudit moule.